# EUROPEAN PATENT APPLICATION

(11) **EP 3 121 223 A1**
(43) Date of publication of application: **25.01.2017**
(21) Application number: 15306203.9
(22) Date of filing: 24.07.2015
(51) Int. Cl.: C08K 5/103, C08L 1/12, C08L 1/14

(54) **PLASTICIZED CELLULOSE ESTER DERIVATES, A PROCESS FOR ITS PRODUCTION AND ITS USES**

(71) Applicant: Rhodia Operations, 75009 Paris (FR)
(72) Inventor: The designation of the inventor has not yet been filed
(74) Representative: Benvenuti, Federica

(57) **Abstract**

The present invention relates to a plasticized cellulose ester derivative composition comprising a cellulose ester derivative and at least a compound of formula (I) 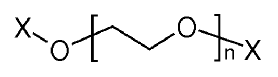 wherein n represents an integer varying from 1 to 10, and X represents a group of formula (II) 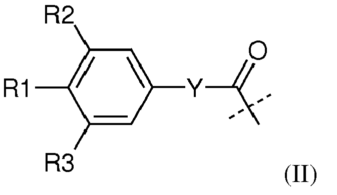 with R1 represents a hydrogen atom or a hydroxyl group; R2 and R3 independently represent a hydrogen atom, an hydroxyl group, a (C₁-C₄)alkyl group or a -O(C₁-C₄)alkyl group ; Y represents a bond or a group -C=C- in configuration (E), and when Y is a bond, at least one of R1, R2 and R3 is different from a hydrogen atom.

The present invention further relates to the use of a compound of formula (I) as a plasticizer of a cellulose ester derivative and a process for the manufacture of a plasticized article.

## Description

The present invention concerns plasticized compositions comprising cellulose ester derivates and more particularly cellulose acetate, a process for its production and its uses.

Cellulose acetate itself has no thermoplasticity. The use of an appropriate plasticizer in the thermal molding soften the polymer and gives rise to a temperature suitable for processing. Further, the addition of a plasticizer can improve the flexibility of a molded article. A list of typical plasticizers compatible with cellulose acetate is as follows: phthalates derivatives such as dibutylphthalate (DBP), diethylphthalate (DEP), dimethyl phthalate (DMP), di-2-methoxyethyl phthalate, ethyl phthalyl ethyl glycolate (EPEG) and methyl phthalyl glycolate (MPEG); citrate derivatives such as triethyl citrate and acetyl triethylcitrate; polyols, polyesters or oligoesters such as dibutyl tartrate, ethyl O-benzoylbenzoate, triacetin, triproprionin; phosphate derivatives such as triethyl phosphate (TEP) and triphenyl phosphate (TPP) and other derivatives such as o-cresyl p-toluensulfonate and N-ethyltoluenesulfonamide.

By way of example, polyalkylenes-glycol dibenzoates were studied in the past but have never been really taken up industrially at larges scales as plasticizers of cellulose ester derivatives. Among such polyalkylenes-glycol dibenzoates, ethylene glycol dibenzoate, diethylene glycol dibenzoate, triethylene glycol dibenzoate, propylene glycol dibenzoate, dipropylene glycol dibenzoate, dipropylene glycol bis-chlorobenzoate were mentioned in various patent documents.

The following patent documents may more particularly be cited as dealing with said research field: US2,956,978 ; US3,110,603 ; US778.743 ; US2,914,436 ; FR1,268,246 ; GB915,570: FR1,424,086 ; JP53149252 and US2,286,314.

Moreover, dibenzoyl-alkylene glycol family was previously commercialized under the name Benzoflex ®.

Moreover, most of the plasticizers in the art have a fossil origin. Some of them have to answer to toxico -eco toxicological regulation issues (family of phthalates for example), and very few are potentially bio-based such as triacetin and triethyl citrate.

Thus, there is on one hand a need to propose new families aiming at extending the panel of potentially bio-based plasticizers of cellulose derivatives.

More particularly, there is as need to provide plasticizers of cellulose derivatives derived from renewable, i.e. biosourced, matter.

There is also a continuing need to provide the skilled person with new plasticizers that can provide an efficient plasticizing performance, in particular comparable or even better plasticizing performances than reference plasticizers such as dibenzoyl-triethylene glycol.

There is also a need to dispose new plasticizers that permit a comparable exudation, or even a limited exudation in time and temperature, in particular when compared to reference compositions comprising dibenzoyl-triethylene glycol as plasticizer.

The present invention has for purpose to meet these needs.

Therefore, the present invention concerns a plasticized cellulose ester derivative composition comprising a cellulose ester derivative and at least a compound of formula (I) 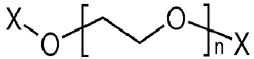 wherein
n represents an integer varying from 1 to 10, and
X represents a group of formula (II) 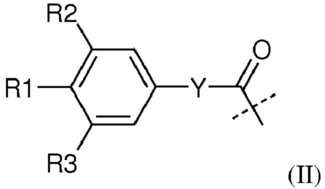 with
R1 represents a hydrogen atom or a hydroxyl group,
R2 and R3 independently represent a hydrogen atom, an hydroxyl group, a (C₁-C₄)alkyl group or a -O(C₁-C₄)alkyl group,
Y represents a bond or a group -C=C- in configuration trans or configuration (E),
and when Y is a bond, at least one of R1, R2 and R3 is different from a hydrogen atom

In another particular embodiment, the present invention concerns the use of a compound of formula (I) as defined above as plasticizer of a cellulose ester derivative, and more particularly of cellulose ester, and even more particularly of cellulose acetate.

In another particular embodiment, the present invention concerns a process for the manufacture of a plasticized article comprising the steps of:
(a) having a composition according to the present invention, and
(b) forming the composition to produce the article, for example by means of extrusion and injection molding.

In a further particular embodiment, the present invention relates to the use of a composition according to the present invention for producing a plasticized article, for example a plasticized article selected from a cosmetic packaging, food packaging, hair accessories, wiring devices, electronic devices, home appliances, eye glass frame and tool handle.

In the context of the present invention, the expression:
- "a (C₁-C₄)alkyl group" as used herein refers to a linear or branched, saturated or unsaturated alkyl group having from 1 to 4 carbon atoms. Examples are, but are not limited to a methyl group, an ethyl group, a propyl group, a secondary butyl group, a n-butyl group, a tertio-butyl group,
- "exudation" means that a product is released from a matrix of origin.
More particularly in the framework of the present invention, exudation may be stated when the plasticizer releases from the cellulose derivative matrix over a period of time over 20 hours, more than a reference composition plasticized with dibenzoyl-triethylene glycol in similar amounts. The measure of the amount of plasticizer that can exudate from the cellulose derivative matrix may be performed by Isothermal ThermoGravimetric Analysis (I-TGA) at 60°C during 20 hours, as it will be more particularly illustrated in the examples, and
- A "reference composition" means a composition comprising the same amount by weight of plasticizer in the composition as the tested one, and for example a composition comprising the same amount by weight of triacetin as the amount of the tested plasticizer.

In the framework of the present invention, the plasticizing performance may be evaluated by the depletion of the glass transition temperature of the polymer, induced by the introduction of the plasticizer.

In the sense of the invention, a material of renewable origin, also known as a biomaterial or biobased molecule, or alternatively a biosourced material, is a material derived from starting materials of renewable origin, and for example from plants. A material may comprise a content of biocarbon and a content of fossil carbon. In the sense of the present invention, a material may be qualified as a biomaterial or a biobased molecule when it is extracted from vegetal biomass, which may be selected in a group comprising a plant or a part thereof (e.g. leave, stem, root).

### CELLULOSE DERIVATIVE

The cellulose derivative is generally an organic and particularly aliphatic ester of cellulose.

The cellulose derivative may also encompass ethylcellulose, hydroxyethylcellulose, methylcellulose, hydroxymethylcellulose, hydroxypropylcellulose and carboxymethylcellulose.

Advantageously, the cellulose ester has an acyl group having 2 to 4 carbon atoms as the ester group. It may be mixed esters of cellulose. There may be mentioned as an example of suitable cellulose ester in the context of the invention: cellulose acetate, cellulose propionate, cellulose butyrate, cellulose acetate propionate, cellulose acetate butyrate, cellulose acetate propionate butyrate, carboxymethyl cellulose acetate propionate and mixtures thereof. The butyryl group forming butyrate may be linear or branched.

According to a particular embodiment, cellulose ester may be selected among cellulose acetate, cellulose propionate and cellulose butyrate and even more particularly, the cellulose ester is cellulose acetate.

According to a particular embodiment of the invention, the cellulose derivative is obtained from cellulose from high quality wood pulp, or from cellulose from cotton linters. By "high quality wood pulp" is meant a wood pulp comprising at least 95% by weight of alpha cellulose. The amount of alpha cellulose is determined according to ISO standard 692.

When the cellulose ester is cellulose acetate, the molecular weight may range from 30000 to 150000, in particular from 50000 to 120000 and more particularly from 70000 to 100000.

Advantageously, the degree of substitution (DS) of the cellulose, which is also expressed as acetyl value (combined acetic acid (%)), is from 2 to 3, preferably from 2.0 to 2.6, and most preferably from 2.3 to 2.5, for example is about 2.45. The degree of substitution of the cellulose is determined in accordance with ASTM D871-72.

### COMPOUND OF FORMULA (I)

The compound of formula (I) is defined as follows 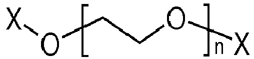 wherein
n represents an integer varying from 1 to 10, and
X represents a group of formula (II) 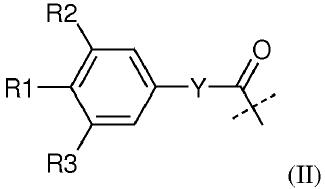 with
R1 represents a hydrogen atom or a hydroxyl group,
R2 and R3 independently represent a hydrogen atom, an hydroxyl group, a (C₁-C₄)alkyl group or a -O(C₁-C₄)alkyl group,
Y represents a bond or a group -C=C- in configuration trans or E configuration
and when Y is a bond, at least one of R1, R2 and R3 is different from a hydrogen atom.
n may be 2, 3, 4, 5, 6, 7, 8, 9 or 10. It may in particular be 2, 3 and 4.

According to a particular embodiment, the molecular weight is at least 200 g/mol, or at least 250 g/mol, or even at least 300 g/mol.

The molecular weight of the compound of formula (I) may range from 200 to 600, more particularly from 250 to 500, and even more particularly from 350 to 450.

According to a particular embodiment, a compound of formula (I) is defined as having a R1 group being a hydroxyl group or a hydrogen atom, having R2 and R3 independently representing a hydrogen atom, a methyl group or a methoxy group, having n being an integer from 2 to 6, preferentially from 2 to 4 and having Y as defined above.

According to a further embodiment, the present invention concerns a compound of formula (I) wherein X represents the group (IIa) 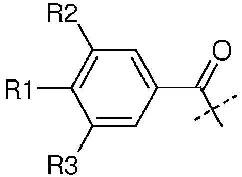 with R1, R2, R3 and n having the same meanings as above. Said compounds may also be named compounds of formula (Ia).

Said compounds of formula (Ia) are more particularly dedicated to provide an efficient plasticizing performance, in particular comparable or even better plasticizing performances than reference plasticizers such as dibenzoyl-triethylene glycol.

Said compounds of formula (Ia) are furthermore dedicated to provide comparable exudation, or even a limited exudation in time and temperature, in particular when compared to reference compositions comprising dibenzoyl-triethylene glycol as plasticizer.

Said compounds of formula (Ia) are more particularly suitable for obtaining plasticized compositions comprising cellulose ester derivatives in spite of their molecular weight greater than 200 g/mol, 250 g/mol, or even 350 g/mol.

According to a more particular embodiment, the compound of formula (I) with X representing a group (IIa) is further defined as having a R1 group being a hydroxyl group and having R2 and R3 independently representing a hydrogen atom, a methyl group or a methoxy group, having n being an integer from 2 to 6, preferentially from 2 to 4.

The following structure illustrates a compound of formula (I) wherein X represents the group (IIa), according to the present invention:

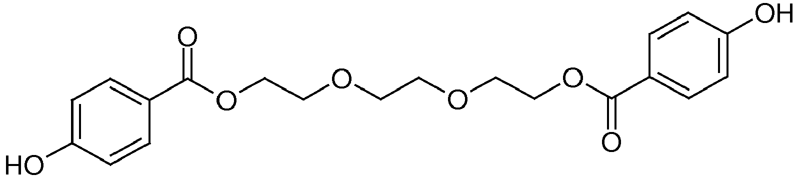

### (1), dihydroxybenzoyl triethylene glycol. Its molecular weight is 390 g/mol.

According to a further embodiment, the present invention concerns a compound of formula (I) wherein X represents the group (IIb) 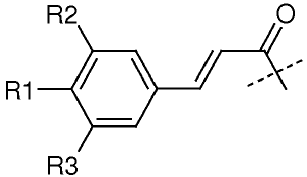 with R1, R2, R3 and n having the same meanings as above. Said compounds may also be named compounds of formula (Ib).

Said compounds of formula (Ib) are more particularly dedicated to provide new families aiming at extending the panel of potentially biosourced plasticizers of cellulose derivatives.

Said compounds of formula (Ib) more particularly suitable for obtaining plasticized compositions comprising cellulose ester derivatives in spite of their molecular weight greater than 200 g/mol, 250 g/mol, or even 350 g/mol.

According to a more particular embodiment, the compound of formula (I) with X representing a group (IIb) is further defined as having a R1 group being a hydrogen atom and having R2 and R3 independently representing a hydrogen atom, a methyl group or a methoxy group, having n being an integer from 2 to 6, preferentially from 2 to 4.

The following structure illustrates a compound of formula (I) wherein X represents the group (IIb), according to the present invention:

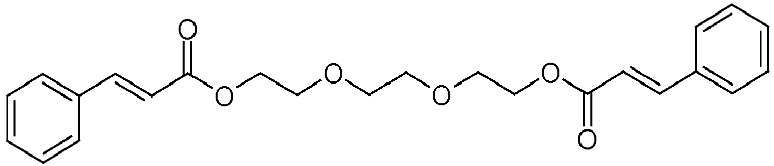

### (2), dicinnamoyl triethylene glcyol. Its molecular weight is 410 g/mol.

According to a particular embodiment, the compound of formula (I) is a biobased molecule.

According to another particular embodiment, the compound of formula (I) comes from a synthetic process where the starting matter occurs naturally in plants, trees, fruits or vegetables.

As a way of illustration, compounds of formula (I) wherein X represents the group (IIb), and more specifically compound (2) as defined above, are more particularly interesting with respect to the technical problem consisting in implementing biobased molecule as plasticizers. Said cinnamoyl derivatives may be a source for the synthesis of further compounds of formula (I) according to methods well known from the man skilled in the art.

Coumaric acid, ferulic acid, sinapic acid and their corresponding derivatives, and more particularly their corresponding aldehydes may also be considered as potential sources for the synthesis of compounds of formula (I).

Cinnamic acid may for example be extracted from cinnamon; coumaric acid may for example be extracted from peanut, garlic, tomatoes, wine and vinegar; sinapic acid may for example be extracted from wine and vinegar and ferulic acid may for example be extracted from seeds of coffee, apple, peanut and orange.

### COMPOSITION

The present invention relates to a plasticized cellulose ester derivative composition comprising
(a) at least one cellulose ester derivative, which is present in an amount ranging from 60 and 95% by weight, in particular from 65 to 85% by weight, more particularly from 70 to 80% by weight, with respect to the total weight of the composition,
(b) at least one compound of formula (I) as defined in anyone of the preceding claims, which is present in an amount ranging from 5 and 40% by weight, in particular from 15 to 35 % by weight, more particularly from 20 to 30% by weight, with respect to the total weight of the composition, and
(c) optionally at least one additional compound, which is present in an amount ranging from 0 to 15% by weight, in particular from 0.1 to 10% by weight, with respect to the total weight of the composition.

The composition according to the invention may further encompass at least one additional compound.

Among said additional compounds, anti-UV compounds, stabilizers, acid scavengers, lubricants, pigments, dyes, odor maskers, brighteners and mixtures thereof may be cited, as any other optional additives usually used to prepare cellulose derivatives and more particularly cellulose acetate, for example depending on the application.

The composition may also comprise an additional plasticizer or co-plasticizer being different from the plasticizer according to the present invention.

Among said additional plasticizer or co-plasticizer the following may be cited: triacetin, diethyl phthalate, dimethyl phthalate, butyl phthalyl butyl glycolate, diethyl citrate, dimethoxy ethyl phthalate, ethyl phthalyl ethyl glycolate, methyl phthalyl ethyl glycolate, sulfonamides n-ethyl-o, p-toluene, triphenyl phosphate, tricresyl phosphate, dibutoxy ethyl phthalate, diamyl phthalate, tributyl citrate, acetyl tributyl citrate, acetyl tripropyl citrate, tripropionin, tributyrin, o,p-toluene sulfonamide, pentaerythritol tetraacetate, dibutyl tartrate, diethylene glycol diacetate, diethylene glycol dipropionate, dibutyl adipate, dioctyl adipate, dibutyl azelate, trichloroethyl phosphate, tributyl phosphate, di-n-butyl sebacate, dibutyl phthalate, dioctyl phthalate, butylbenzyl phthalate, 2-ethylhexyl adipate, di-2-ethylhexyl phthalate and mixtures thereof.

When present, the additional compounds may be present in the composition in a content ranging from 0.05 to 15% by weight and preferably ranging from 0.1 to 10% by weight relative to the total weight of the composition.

It is a matter of routine operations for a person skilled in the art to adjust the nature and amount of the additional compounds present in the compositions in accordance with the invention such that the desired properties thereof are not thereby affected.

This is all the more true in connection to the optional presence of an additional plasticizer that should not alter the desired properties in connection to the presence of a plasticizer of formula (I), in particular with respect to the plasticizing power and the limited exudation.

### PROCESS ACCORDING TO THE INVENTION

A composition according to the present invention may be prepared according to the general knowledge of a person skilled in the art.

The plasticizer may be liquid or solid.

The preparation of the composition according to the present invention may merely consist in a direct implementation by a melt way of a mixture of the cellulose derivative with the plasticizer of formula (I) and optionally with at least one additional compound as defined above. It may more precisely consist in blending the melted cellulose derivative, the plasticizer and the at least one additional compound. The melting temperature may be preferably set from 160 to 220°C. Said mixture is generally carried out without solvent.

The process for the manufacture of a plasticized article also forms part of the invention. Therefore the present invention also concerns a process for the manufacture of a plasticized article comprising the steps of:
(a) having a composition according to the present invention, and
(b) forming the composition to produce the article.

The composition according to step (a) may comprise a compound of formula (I) extracted from a vegetable biomass.

Therefore, said process may be preceded by a step of extraction of a compound of formula (I) from a vegetable biomass.

Step (b) may be performed according to usual means known from the man skilled in the art, i.e. extrusion and injection molding.

### APPLICATIONS

Depending on the way it has been processed cellulose derivatives, and more particularly cellulose acetate, can be used for great varieties of applications (e.g. for films, membranes or fibers and also for 3D objects).

A plasticized article as a 3D object may be for example a cosmetic packaging, food packaging, hair accessories, wiring devices, electronic devices, home appliances, eye glass frames and tool handles.

The properties of the applied cellulose acetates are very important for these applications. Another special field for using cellulose acetate is the synthesis of porous, spherical particles, so called cellulose beads.

The applicative domain of the invention can be extended to domains for which the occurrence of this type of plasticizer can increase some specific properties such as optical performance retardation films.

Throughout the description, including the claims, the term "comprising a" should be understood as being synonymous with "comprising at least one", unless otherwise mentioned.

The terms "between... and..." and "from... to..." should be understood as being inclusive of the limits, unless otherwise specified.

The examples below of compositions according to the invention are given as illustrations with no limiting nature.

### EXAMPLES

Comparative example is incorporated for comparative purpose with plasticized cellulose acetate composition comprising dibenzoyl triethylene glycol, considered as a reference plasticizer.

Compositions according to the invention are illustrated in example 1 and 2.

Results with respect to the plasticizing power and exudation in connection to compositions according to the invention in comparison to the reference composition is reported in example 3.

"DS" means Degree of Substitution.

### Comparative example: preparation of a plasticized cellulose acetate composition comprising dibenzoyl triethylene glycol (70/30 (w/w) Composition)

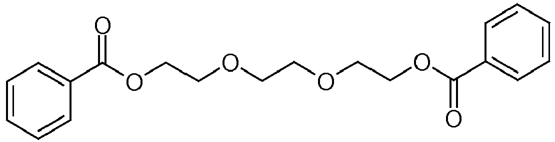

### Dibenzoyl triethylene glycol (Mw=358 g/mol)

7 grams of Cellulose Acetate (DS=2.45) and 3 grams of DiBenzoyl-TriethyleneGlycol have been mixed at 200°C through micro-extrusion then micro-injection, said trials being performed on a DSM micro-compounder, in order to obtain injection moulded sheets that can be further characterized. Said sheets present a size of 90 x 13 x 2mm³. The polymer-plasticizer composition (70/30 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 1: preparation of a plasticized cellulose acetate composition comprising diHydroxyBenzoyl-TriethyleneGlycol (70/30 (w/w) Composition)

7 grams of Cellulose Acetate (DS=2.45) and 3 grams of DihydroxyBenzoyl-TriethyleneGlycol have been mixed at 210°C through micro-extrusion then micro-injection in order to obtain injection moulded sheets that can be further characterized. The polymer-plasticizer composition (70/30 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 2: preparation of a plasticized cellulose acetate composition comprising dicinnamoyl triethyleneGlycol (70/30 (w/w) Composition)

7 grams of Cellulose Acetate (DS=2.45) and 3 grams of DiCinnamoyl-TriethyleneGlycol have been mixed at 210°C through micro-extrusion then micro-injection in order to obtain injection moulded sheets that can be further characterized. The polymer-plasticizer composition (70/30 w/w) is then characterized by:
- Differential Scanning Calorimetry (DSC) which permits to identify the decrease of the Glass Transition Temperature (Tg1) of the composition as compared to the Glass Transition Temperature (Tg0) of the polymer as such, and permits to measure the Plasticizing Power (Tg0 - Tg1) of the plasticizer used
- Isothermal ThermoGravimetric Analysis (I-TGA) performed at 60°C during 20 hours which permits to measure the amount of plasticizer that can exudate from the polymer matrix over time.

### Example 3: results with respect to plasticizing power and exudation associated with examples 1 and 2

The results from Example 1 and 2 are listed in the following Table:

| **Plasticizer** | **Tg1 (°C)** | **Plasticizing Power (°C) (*)** | **Exudation Amount (%w)** |
|---|---|---|---|
| DiBenzoyl-TriethyleneGlycol | 125 | 68 | 0.60 |
| DihydroxyBenzoyl-TriethyleneGlycol | 115 | 78 | 0.10 |
| DiCinnamoyl-TriethyleneGlycol | 135 | 58 | 0.50 |

(*) Plasticizing Power = Tg0 - Tg1, with Tg0 = 193°C (Glass Transition Temperature of Cellulose Acetate DS=2.45 as such)

The platicizing power value of the compositions comprising dihydroxy benzoyl triethylene glycol is better than the plasticizing power of the reference composition.

The exudation amount of the compositions comprising dihydroxy benzoyl triethylene glycol is under the one as obtained with the reference composition.

The platicizing power value of the compositions comprising dicinnamoyl-triethylene glycol is comparable to the plasticizing power of the reference composition.

The exudation amount of the compositions comprising dicinnamoyl-triethylene glycol is slightly under the one as obtained with the reference composition.

## Claims

1. A plasticized cellulose ester derivative composition comprising a cellulose ester derivative and at least a compound of formula (I) 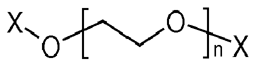 wherein
n represents an integer varying from 1 to 10, and
X represents a group of formula (II) 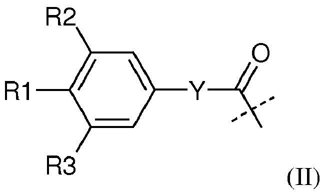 with
R1 represents a hydrogen atom or a hydroxyl group,
R2 and R3 independently represent a hydrogen atom, an hydroxyl group, a (C₁-C₄)alkyl group or a -O(C₁-C₄)alkyl group,
Y represents a bond or a group -C=C- in configuration (E),
and when Y is a bond, at least one of R1, R2 and R3 is different from a hydrogen atom.

2. The composition according to claim 1, wherein the molecular weight of the compound of formula (I) ranges from 200 to 600, more particularly from 250 to 500, and even more particularly from 350 to 450 g/mol.

3. The composition according to claim 1 or 2, wherein compound of formula (I) has a R1 group being a hydroxyl group or a hydrogen atom, has R2 and R3 independently representing a hydrogen atom, a methyl group or a methoxy group, has n being an integer from 2 to 6, preferentially from 2 to 4 and has Y as defined in claim 1.

4. The composition according to anyone of claims 1 to 3, wherein the compound of formula (I) has X representing the group (IIa) 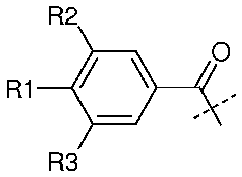 with R1, R2, R3 and n having the same meanings as in claim 1 or 3.

5. The composition according to the preceding claim, wherein R1 represents a hydroxyl group; R2 and R3 independently represent a hydrogen atom, a methyl group or a methoxy group and n is an integer from 2 to 6, preferentially from 2 to 4.

6. The composition according to anyone of the preceding claims, wherein the compound of formula (I) is

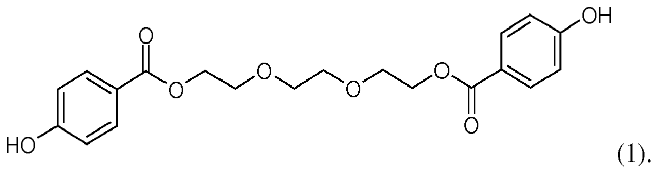

7. The composition according to anyone of claims 1 to 3, wherein the compound of formula (I) has X representing the group (IIb) 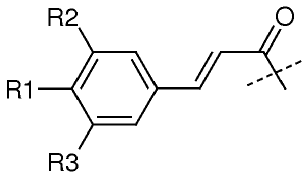 with R1, R2, R3 and n having the same meanings as in claim 1 or 3.

8. The composition according to the preceding claim, wherein R1 is a hydrogen atom; R2 and R3 independently represents a hydrogen atom, a methyl group or a methoxy group, and n is an integer from 2 to 6, preferentially from 2 to 4.

9. The composition according to anyone of claims 1 to 3 and 7 and 8, wherein the compound of formula (I) is:

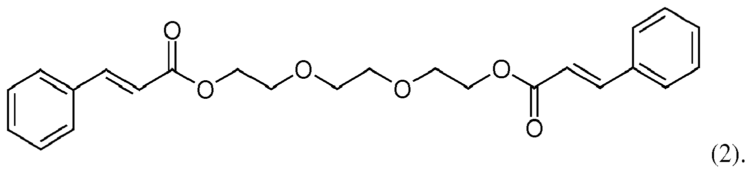

10. The composition according to anyone of the preceding claims, wherein the compound of formula (I) is a biobased molecule.

11. A plasticized cellulose ester derivative composition comprising
(a) at least one cellulose ester derivative, which is present in an amount ranging from 60 and 95% by weight, in particular from 65 to 85% by weight, more particularly from 70 to 80% by weight, with respect to the total weight of the composition,
(b) at least one compound of formula (I) as defined in anyone of the preceding claims, which is present in an amount ranging from 5 and 40% by weight, in particular from 15 to 35 % by weight, more particularly from 20 to 30% by weight, with respect to the total weight of the composition, and
(c) optionally at least one additional compound, which is present in an amount ranging from 0 to 15% by weight, in particular from 0.1 to 10% by weight, with respect to the total weight of the composition.

12. The composition according to the preceding claim, wherein the additional compound is selected from anti-UV compounds, stabilizers, acid scavengers, lubricants, pigments, dyes, odor maskers, brighteners, additional plasticizer or co-plasticizer and mixtures thereof.

13. The composition according to anyone of the preceding claims, wherein the cellulose ester derivative is selected from cellulose acetate, cellulose propionate, cellulose butyrate, cellulose acetate propionate, cellulose acetate butyrate, cellulose acetate propionate butyrate, carboxymethyl cellulose acetate propionate and mixtures thereof and more particularly is cellulose acetate.

14. Use of a compound of formula (I) as defined in anyone of claims 1 to 10 as plasticizer of a cellulose ester derivative, and more particularly of cellulose ester.

15. Process for the manufacture of a plasticized article comprising the steps of:
(a) having the composition according to anyone of claims 1 to 13, and
(b) forming the composition to produce the article, for example by means of extrusion, and injection molding, optionally preceded by a step of extraction of a compound of formula (I) from a vegetable biomass.

16. Use of the composition according to anyone of claims 1 to 13 for producing a plasticized article, for example a plasticized article selected from a cosmetic packaging, food packaging, hair accessories, wiring devices, electronic devices, home appliances eye glass frame and tool handle.
